# EUROPEAN PATENT SPECIFICATION

(11) **EP 3 933 573 B1**
(45) Date of publication and mention of the grant of the patent: **12.07.2023**
(21) Application number: 20790490.5
(22) Date of filing: 23.03.2020
(51) Int. Cl.: G06F 8/658

(54) **ZERO DIFFERENTIAL UPGRADE METHOD, NON-VOLATILE STORAGE MEDIUM AND ELECTRONIC DEVICE**
VERFAHREN FÜR NULLDIFFERENTIALES UPGRADE, NICHTFLÜCHTIGES SPEICHERMEDIUM UND ELEKTRONISCHE VORRICHTUNG
PROCÉDÉ DE MISE À NIVEAU DIFFÉRENTIELLE NULLE, SUPPORT D'ENREGISTREMENT NON VOLATIL ET DISPOSITIF ÉLECTRONIQUE

(30) Priority: 17.04.2019 CN 201910309724
(43) Date of publication of application: 05.01.2022
(73) Proprietor: ZTE Corporation, shenzhen Guangdong 518057 (CN)
(72) Inventor: CAO, Gang, Shenzhen, Guangdong 518057 (CN)
(74) Representative: Zoli, Filippo
(86) International application number: PCT/CN2020/080610
(87) International publication number: WO 2020/211594

(56) References cited:
- EP-A1- 1 956 482
- CN-A- 101 770 515
- CN-A- 105 159 842
- CN-A- 106 528 125
- CN-A- 108 650 287
- US-A1- 2011 295 820
- US-A1- 2013 054 531

## Description

### TECHNICAL FIELD

The present invention relates to the field of communications, in particular to a method for zero differential updating, a non-volatile storage medium and an electronic device.

### BACKGROUND

Differential update is a common FOTA update method designed to save the bandwidth and storage space by transmitting only the differential information between the old and new versions from a server to a terminal device. However, in some unpredictable cases, e.g., power failure or bad block, the original data may be damaged, and it would be impossible to perform the differential update. In such cases, a catastrophic consequence, e.g., the system cannot be restarted, may be incurred, and it is necessary to start a zero differential update, that is, a full-version update mode. However, since the terminal device often has limited FOTA partition space, sometimes it cannot store a zero differential update package, so that it is impossible to perform the zero differential update.

US2011/0295820 A1 discloses limiting memory requirements for differencing and patching of files, in particular large files, wherein block sizes, in particular maximum size, are adjusted.

EP1956482 A1 discloses over-the-air (OTA) updates to a mobile device, wherein rewriting of sectors is minimised.

### SUMMARY

Embodiments of the present invention provide a method for zero differential updating, a non-volatile storage medium and an electronic device, solving the problem to at least a certain extent whereby the zero differential update cannot be carried out because the storage space for updating cannot store a zero differential update package in the existing technology.

According to an embodiment of the present invention, there is provided a method for zero differential updating according to claim 1.

According to another embodiment of the present invention, there is provided a method for zero differential updating according to claim 5.

According to still another embodiment of the present invention, there is also provided a non-volatile storage medium storing a computer program, where the computer program is configured, when executed, to perform the steps in the above method embodiments.

According to yet another embodiment of the present invention, there is also provided an electronic device, including a memory and a processor, where a computer program is stored in the memory, and the processor is configured to execute the computer program to perform the steps in the above method embodiments.

### BRIEF DESCRIPTION OF DRAWINGS

The accompanying drawings described here are used to provide a further understanding of the present invention and constitute a part of the present invention. The illustrative embodiments of the present invention and their descriptions are used to explain the present invention, and do not constitute an improper limitation to the present invention. In the accompanying drawings:
Fig. 1 is a schematic diagram of a network architecture according to an embodiment of the present invention;
Fig. 2 is a flowchart of a method for zero differential updating according to an embodiment of the present invention;
Fig. 3 is a flowchart of a method for zero differential updating according to another embodiment of the present invention;
Fig. 4 is a structural block diagram of a zero differential update device according to an embodiment of the present invention;
Fig. 5 is a structural block diagram of a zero differential update device according to another embodiment of the present invention;
Fig. 6 is a structural schematic diagram of a system according to an embodiment of the present invention;
Fig. 7 is a flowchart of a mobile terminal side according to an embodiment of the present invention; and
Fig. 8 is a flowchart of a server side according to an embodiment of the present invention.

### DETAILED DESCRIPTION

The present invention will be described in detail below with reference to the accompanying drawings in conjunction with embodiments. It should be noted that combinations of embodiments and features of the embodiments of the present invention without conflict are possible.

It should be noted that the terms "first", "second", etc. in the description and the claims of the present invention and the above-mentioned drawings are intended to distinguish similar objects and are not necessarily to describe a specific order or sequence.

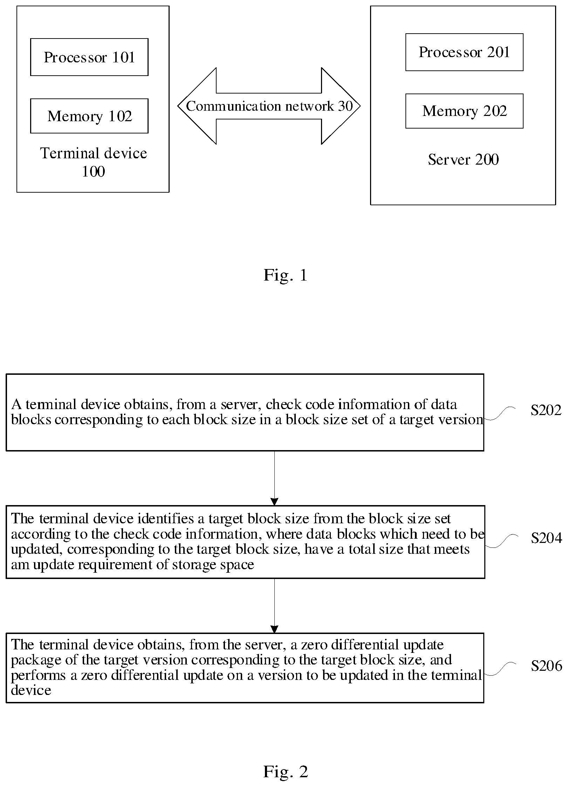

An embodiment of a method provided in the present invention may run on a network architecture of a terminal device/server. Fig. 1 is a schematic diagram of a network architecture on which a method for zero differential updating of an embodiment of the present invention runs. As shown in Fig. 1, a terminal device 100 may be a mobile terminal, a computer terminal or other similar computing terminals running software. The terminal device 100 may include one or more (only one is shown in Fig. 1) processors 101 (the processors 101 may include but are not limited to processing devices such as a microprocessor MCU or a programmable logic device FPGA) and a memory 102 for storing data. Those having ordinary skills in the art can understand that the structure of the terminal device 100 shown in Fig. 1 is only schematic, which does not limit its structure. For example, the terminal device 100 may further include more or fewer components than those shown in Fig. 1, or have a different configuration from that shown in Fig. 1.

The memory 102 may be configured to store computer programs, for example, software programs and modules of application software, such as computer programs corresponding to the method for zero differential updating in the embodiment of the present invention. The processor 101 runs the computer programs stored in the memory 102 for executing various functional applications and data processing, that is, implementing the method described above. The memory 102 may include a high-speed random access memory, and may also include a non-volatile memory, such as one or more magnetic storage devices, a flash memory, or other non-volatile solid-state memories. In some examples, the memory 102 may further include memories remotely located with respect to the processor 102, and these remote memories may be connected to the terminal device 100 through a network.

Similarly, the server 200 may also be a general-purpose computer server, a special-purpose server or other similar computer devices running software. The server 200 may include one or more (only one is shown in Fig. 1) processors 201 (the processors 201 may include but are not limited to processing devices such as a microprocessor MCU or a programmable logic device FPGA) and a memory 202 for storing data. Those of ordinary skill in the art can understand that the structure of the server 200 shown in Fig. 1 is only schematic, which does not limit the structure of the server 200 described above.

The terminal device 100 may communicate with the server 200 through a network 30. The network 30 may be a wireless network or a wired network. The network 30 is not limited to the Internet, an intranet, a local area network, a mobile communication network, and a combination thereof.

In this embodiment, there is provided a method for zero differential updating running in the network architecture described above. This embodiment mainly describes zero differential update steps from the point of view of the terminal device. Fig. 2 is a flowchart of a method for zero differential updating according to an embodiment of the present invention. As shown in Fig. 2, the flow may include the following steps.

At step S202, a terminal device 100 obtains, from a server 200 (e.g., an update server), check code information of data blocks corresponding to each block size in a block size set of a target version.

In this embodiment, a version to be updated in the terminal device 100 needs to be updated to the target version, so the target version needs to be downloaded from the server 200. In the server 200, the target version may be divided according to multiple different block sizes, and all the different block sizes form a block size set. According to each block size, the target version may be divided into multiple data blocks, and each data block has its corresponding check code. For example, if the data size (size) of a target version is 6M, which can be divided according to the block size of 512K, 256K, 128K, 64K, 32K, 8K, 4K, 2K and 1K, its block size set is {512K, 256K, 128K, 64K, 32K, 8K, 4K, 2K and 1K}. Corresponding to the block size of 512K, the target version is divided into 6M/512K = 6 * 1024K/512K = 12 data blocks. By analogy, corresponding to other block sizes, the target version is also divided into different numbers of data blocks. The server 200 may sequentially calculate the check codes of all the data blocks of the corresponding block size of the target version and send them to the terminal device 100.

At step S204, the terminal device 100 identifies a target block size from the block size set according to the check code information, where data blocks which need to be updated, corresponding to the target block size, have a total size that meets an update requirement of storage space.

During the zero differential update, since the target version needs to be downloaded to an FOTA partition on the terminal device 100 side, it is necessary to determine whether the update size of the target version meets the storage requirement of the FOTA partition. In the above steps, a satisfied target block size can be determined according to the requirement.

At step S206, the terminal device 100 obtains, from the server 200, a zero differential update package of the target version corresponding to the target block size, and performs a zero differential update on a version to be updated in the terminal device 100.

In this embodiment, the zero differential update packet may carry data blocks that need to be updated with the target block size, for example, data block 1, data block 3 and data block 9 with the block size of 512K. Therefore, the version to be updated in the terminal device 100 can be updated according to the zero differential update package.

In this embodiment, the check code may be a cyclic redundancy check code. Of course, in other embodiments, the check code may also be other check codes capable of error checking.

In an embodiment, step S202 includes: transmitting a first request message to the server 200, where the first request message is configured to request check code information of data blocks corresponding to each block size in a block size set of a target version; and receiving a first response message from the server 200, where the first response message carries the block size set of the target version and check codes of the data blocks corresponding to each block size.

In an embodiment, step S204 includes: selecting a block size from the block size set, and calculating check codes of data blocks with the block size in the version to be updated; calculating a total size of data blocks with the block size of the target version having different check codes from the corresponding data blocks of the version to be updated, and taking the total size as an update size; determining whether the update size regarding the block size meets the storage space for updating; and if so, identifying the block size as the target block size, otherwise reselecting a new block size from the block size set, and calculating whether the update size thereof meets the requirement of the storage space for updating until the block size meeting the requirement is selected.

In the above steps, the block size is selected from the block size set according to a predetermined selection order (the predetermined selection order may be determined according to experience or a preset optimization scheme). According to the invention, a block size is selected in descending order. Generally speaking, the smaller the block size, the smaller the corresponding update size. However, the smaller the block size is, the more calculation of the check code is required, and the more FLASH erasing and block alignment-based operations are required on the terminal device 100 side, thereby resulting in an increase in update time. Therefore, the block size is selected in descending order, and once the update size meets a requirement of storage space, i.e. is less than the available FOTA storage space of the current terminal device 100, the selection can be stopped.

In an embodiment, step S206 includes: transmitting a zero differential packet request message to the server 200, where the zero differential packet request message carries an identification of the target block size and identifications of the data blocks of the target version corresponding to the target block size and having different check codes from the corresponding data blocks of the version to be updated; receiving a zero differential packet request response message from the server 200, where the request response message carries the data blocks of the target version corresponding to the target block size and having different check codes from the corresponding data blocks of the version to be updated; and updating the version to be updated according to the data blocks carried in the zero differential packet request response message.

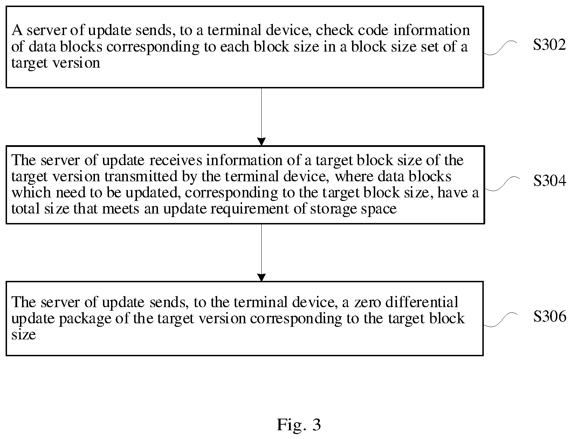

In this embodiment, there is also provided a method for zero differential updating running on the network architecture described above. The method can run on the server 200 side, and relevant steps are executed by the server 200 side. This embodiment mainly describes the zero differential update steps from the point of view of the server 200. Fig. 3 is a flowchart of a method for zero differential updating according to an embodiment of the present invention. As shown in Fig. 3, the flow includes the following steps.

At step S302, a server 200 sends, to a terminal device 100, check code information of data blocks corresponding to each block size in a block size set of a target version.

At step S304, the server 200 receives information of a target block size of the target version transmitted by the terminal device 100, where data blocks which need to be updated, corresponding to the target block size, have a total size that meets a requirement of the storage space for updating.

At step S306, the server 200 sends, to the terminal device 100, a zero differential update package of the target version corresponding to the target block size.

In an embodiment, step S302 includes: receiving, by the server 200, a first request message from the terminal device 100, where the first request message is configured to request check code information of data blocks corresponding to each block size in a block size set of a target version; and transmitting, by the server 200, a first response message to the terminal device 100, where the first response message carries the block size set of the target version and check codes of the data blocks corresponding to each block size.

In an embodiment, step S304 includes: receiving, by the server 200, a zero differential packet request message transmitted by the terminal device 100, where the zero differential packet request message carries an identification of the target block size and identifications of the data blocks of the target version corresponding to the target block size and having different check codes from the corresponding data blocks of the version to be updated.

In an embodiment, step S306 includes: transmitting, by the server 200, a zero differential packet request response message to the terminal device 100, where the request response message carries the data blocks of the target version corresponding to the target block size and having different check codes from the corresponding data blocks of the version to be updated.

Through the description of the above embodiments, those having ordinary skills in the art can clearly understand that the method according to the above embodiments may be implemented by means of software plus necessary general hardware platform, and of course it may be implemented by means of hardware, but in many cases the former is a better implementation. Based on this understanding, the technical scheme of the present invention can be embodied in the form of a software product. The computer software product is stored in a storage medium (such as ROM/RAM, magnetic disk, optical disk) and includes a number of instructions to enable a terminal equipment (which may be a mobile phone, a computer, a server, or network equipment, etc.) to perform the method described in each embodiment of the present invention.

In this embodiment, there is also provided a zero differential update device, which is configured to perform the above embodiments and several implementations, and those that have been described will not be repeated. As used below, the term "module" or "unit" may be a combination of software and/or hardware that implements a predetermined function. Although the device described in the following embodiments is preferably implemented in software, the implementation of hardware, or a combination of software and hardware, is also possible and contemplated.

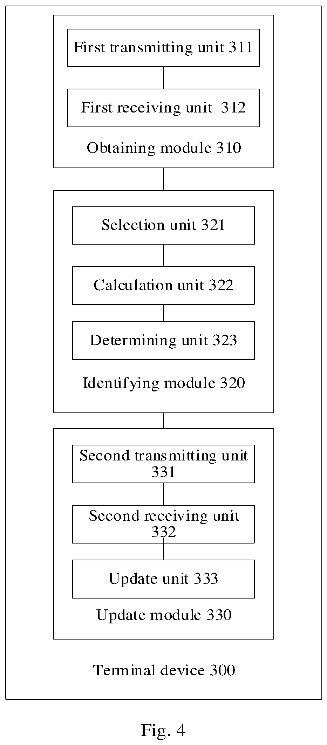

In an embodiment of the present invention, there is provided a zero differential update device. The device may be a terminal device 300 or a part of a terminal device 300. Fig. 4 is a structural block diagram of the device. As shown in Fig. 4, the zero differential update device 300 includes an obtaining module 310, an identifying module 320 and an update module 330.

The obtaining module 310 is configured to obtain, from a server 400, check code information of data blocks corresponding to each block size in a block size set of a target version.

The identifying module 320 is configured to identify a target block size from the block size set according to the check code information, where data blocks which need to be updated, corresponding to the target block size, have a total size that meets a requirement of storage space for updating.

The update module 330 is configured to obtain, from the server 400, a zero differential update package of the target version corresponding to the target block size, and performing a zero differential update on a version to be updated.

In the above embodiment, the obtaining module 310 may further include a first transmitting unit 311 and a first receiving unit 312. The first transmitting unit 311 is configured to send a first request message to the server 400. The first request message is configured to request check code information of data blocks corresponding to each block size in a block size set of a target version. The first receiving unit 312 is configured to receive a first response message from the server 400, where the first response message carries the block size set of the target version and check codes of the data blocks corresponding to each block size.

In the above embodiment, the identifying module 320 may further include a selection unit 321, a calculation unit 322 and a determining unit 323. The selection unit 321 is configured to select a block size from the block size set, and to calculate check codes of data blocks with the block size in the version to be updated. The calculation unit 322 is configured to calculate a total size of data blocks with the block size of the target version having different check codes from the corresponding data blocks of the version to be updated, and taking the total size as an update size. The determining unit 323 is configured to determine whether the update size regarding the block size meets the storage space for updating, and if so, the block size is identified as the target block size, otherwise to a new block size is reselected from the block size set.

In an embodiment, a block size is selected from the block size set in descending order.

In an embodiment, the update module 330 further includes a second transmitting unit 331, a second receiving unit 332 and an update unit 333. The second transmitting unit 331 is configured to transmit a zero differential packet request message to the server 400, where the zero differential packet request message carries an identification of the target block size and identifications of the data blocks of the target version corresponding to the target block size and having different check codes from the corresponding data blocks of the version to be updated. The second receiving unit 332 is configured to receive a zero differential packet request response message from the server 400, where the request response message carries the data blocks of the target version corresponding to the target block size and having different check codes from the corresponding data blocks of the version to be updated. The update unit 333 is configured to update the version to be updated according to the data blocks carried in the zero differential packet request response message.

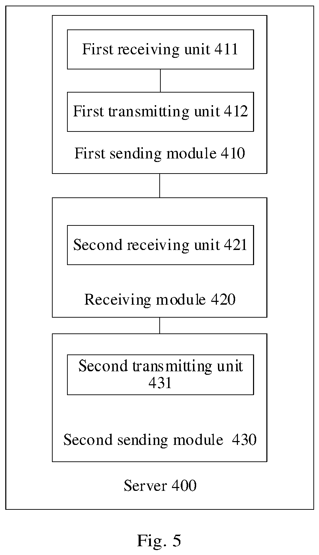

In an embodiment of the present invention, there is provided a zero differential update device. The device may be a server 400 or a part of a server 400. Fig. 5 is a structural block diagram of the device. As shown in Fig. 5, the device 400 includes a first sending module 410, a receiving module 420 and a second sending module 430.

The first sending module 410 is configured to send, to a terminal device 300, check code information of data blocks corresponding to each block size in a block size set of a target version.

The receiving module 420 is configured to receive information of a target block size of the target version transmitted by the terminal device 300, where data blocks which need to be updated, corresponding to the target block size, have a total size that meets a requirement of storage space for updating.

The second sending module 430 is configured to send, to the terminal device 300, a zero differential update package of the target version corresponding to the target block size.

In an embodiment, the first sending module 410 further includes a first receiving unit 411 and a first transmitting unit 412. The first receiving unit 411 is configured to receive a first request message from the terminal device 300, where the first request message is configured to request check code information of data blocks corresponding to each block size in a block size set of a target version. The first transmitting unit 412 is configured to transmit a first response message to the terminal device 300, where the first response message carries the block size set of the target version and check codes of the data blocks corresponding to each block size.

In an embodiment, the receiving module 420 further includes a second receiving unit 421. The second receiving unit 421 is configured to receive a zero differential packet request message transmitted by the terminal device 300, where the zero differential packet request message carries an identification of the target block size and identifications of the data blocks of the target version corresponding to the target block size and having different check codes from the corresponding data blocks of the version to be updated.

In an embodiment, the second sending module 430 further includes a second transmitting unit 431. The second transmitting unit 431 is configured to send a zero differential packet request response message to the terminal device 300, where the request response message carries the data blocks of the target version corresponding to the target block size and having different check codes from the corresponding data blocks of the version to be updated.

It should be noted that the above modules may be implemented by means of software or hardware, and in the latter case, may be implemented in the following way, but not limited thereto: the above modules are all located in the same processor; or the above modules are respectively located, in any combination, in different processors.

The present invention will be described below through an embodiment in practical application. This embodiment is mainly aimed at the application scenario where in the case of a wireless network, when an unrecoverable abnormal situation occurs in the ordinary differential update of a mobile terminal, the mobile terminal interacts with an FOTA server and finally the server sends a zero differential packet with appropriate size to the mobile terminal for the zero differential update, thus completing the smooth update of the software of the mobile terminal.

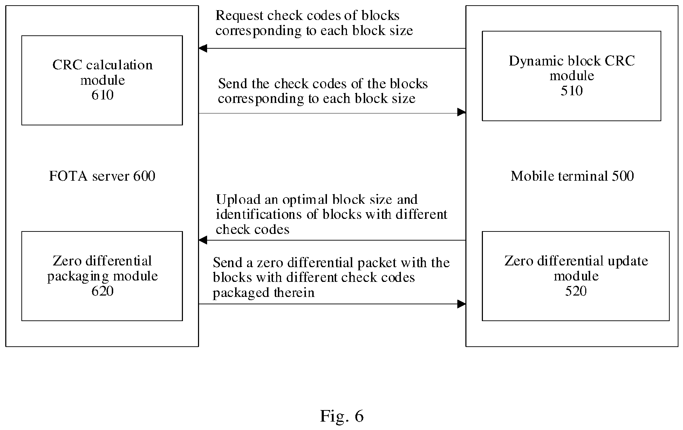

Fig. 6 is a structural schematic diagram of the system of this embodiment. As shown in Fig. 6, the processing of the FOTA server and a corresponding dedicated module on the mobile terminal side is mainly involved. The related functions on the mobile terminal 500 side may mainly include a dynamic block cyclic redundancy check (CRC) module 510 and a zero differential update module 520. The direct aim of the dynamic block CRC module 510 is to find out data blocks with differences between the current version and the target version, that is, it is mainly responsible for requesting, from the FOTA server, CRC code information of blocks with various block sizes in the block size set of the target version, calculating CRC codes of blocks of the current version data of the mobile terminal 500 for each block size, and then compiling statistics on the total size (i.e., update size) of all data blocks with changed data for each block size, where it is determined, according to the difference between the CRC codes of each data block of the current version and the corresponding data block of the target version, that the data block has changed. Generally speaking, the smaller the block size, the smaller the corresponding update size. However, the smaller the block size is, the more CRC calculation is required, and the more FLASH erasing block and alignment-based operations are performed on the mobile terminal 500 side, thereby resulting in an increase in update time. Therefore, the block size needs to be dynamically selected in descending order, and once the update size meets a requirement of storage space, for example, being less than the available FOTA storage space of the current mobile terminal 500, the selection is stopped. Then, the current block size is taken as the optimal block size, and the information such as identifications corresponding to the blocks with this block size that have different check codes is packaged and uploaded to the server. The zero differential update module 520 is responsible for parsing the zero differential packet sent by the FOTA server, and obtaining each data block with the optimal block size that has changed data of for directly performing zero differential update.

The related functions of the FOTA server 600 mainly include a CRC calculation module 610 and a zero differential packaging module 620 for blocks with each block size of the target version. The CRC calculation module 610 calculates the CRC codes of the blocks with each block size in the block size set of the target version, and packages the information and sends same to the mobile terminal 500. The zero differential packaging module 620 is mainly responsible for packaging, according to the optimal block size selected by the mobile terminal 500 and the identifications of the blocks that have been changed in the corresponding data blocks, the data corresponding to these identifications into a zero differential packet and sends same to the mobile terminal 500 for updating.

Based on the above system structure, this embodiment provides a method for zero differential updating based on cyclic redundancy check codes, and its implementation process will be described in detail below.

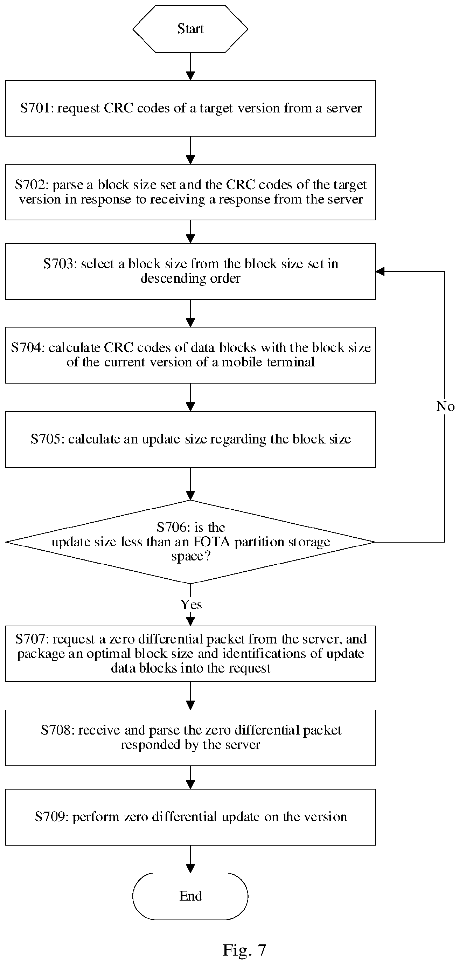

As shown in Fig. 7, in this embodiment, the main processing flow of the mobile terminal side is as follows.

At step S701, after the normal differential update exits abnormally, a request for check code information of the target version is sent to the FOTA server, where the check code information includes cyclic redundancy check codes of data blocks with each block size of the target version. By way of example, the data size of a target version is 6M, and the block size set includes {512K, 256K, 128K, 64K, 32K, 8K, 4K, 2K, 1K} in descending order. Corresponding to the block size of 512K, the target version is divided into 6M/512K = 6 * 1024K/512K = 12 blocks, and then the cyclic redundancy check codes of the data blocks with the size of 512K on the target version are calculated in turn, which are recorded as {TR1, TR2, ..., TR12}. In the same way, corresponding to the block size of 256K, the target version is divided into 6M/256K = 6 * 1024K/256K = 24 blocks, and then the cyclic redundancy check codes of the data blocks with the size of 256K on the target version are calculated in turn, which are recorded as {TM1, TM2, ..., TM24}. Check codes corresponding to other block sizes can be deduced by analogy. The check code information of the above target versions may be prepared in advance on the server.

At step S702, in response to receiving a check code request response from the FOTA server, the block size set (e.g. {512K, 256K, 128K, 64K, 32K, 8K, 4K, 2K, 1K}) and the cyclic redundancy check codes (e.g. {TR1, TR2, ..., TR12}, {TM1, TM2, ..., TM24}, ...) of the data blocks of the target version corresponding to each block size are parsed from a response data packet.

At step S703, a block size is selected from the block size set (e.g. {512K, 256K, 128K, 64K, 32K, 8K, 4K, 2K, 1K}) in descending order.

At step S704, cyclic redundancy check codes of data blocks with the block size (for example, 512K) of the current version of the mobile terminal are calculated, which, for example, are correspondingly recorded as {SR1, SR2, ..., SR12} in turn.

At step S705, a total size of data blocks with the block size of the target version that have different block cyclic redundancy check codes from the corresponding data blocks of the current version, which is called the update size. For example, for the block size of 512K, the check codes of block 1, block 3 and block 9 of the target version are different from the check codes of those of the current version, that is, TR1 is not equal to SR1, TR3 is not equal to SR3, and TR9 is not equal to SR9. The update size L corresponding to the block size of 512K is equal to L1 + L3 + L9, where L1, L3 and L9 respectively indicate the size of each one of the blocks is 512K.

At step S706, determination is made on whether the update size regarding the block size meets the storage requirement of the FOTA partition, i.e. L < Lf, where L is the update size and Lf is the size of the update package storage space available for FOTA. If so, the selection of the block size is stopped, and the process goes to the next step S707, otherwise it goes to step S703 again.

At step S707, the optimal block size (e.g., 512K) and identifications of the data blocks with different corresponding check codes, i.e., identifications (e.g., 1, 3, 9) of the update data blocks are packaged into a zero differential request packet to the server, and then this request is initiated to the server.

At step S708, in response to receiving the zero differential packet request response from the server, and corresponding data block 1, data block 3 and data block 9 of the target version are parsed from a response packet.

At step S709, a zero differential version is updated, for example, data block 1, data block 3 and data block 9 are directly erased to a corresponding area of the current version.

At step S710, the processing ends.

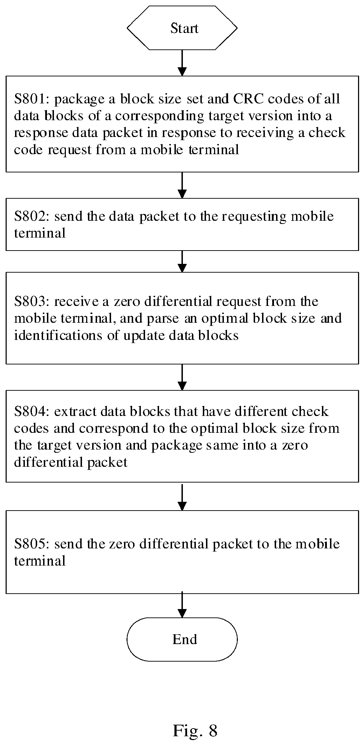

As shown in Fig. 8, in an embodiment of the present invention, the main processing flow of the server side is as follows.

At step S801, in response to receiving a mobile terminal CRC code request transmitted by a mobile terminal, a block size set (e.g. {512K, 256K, 128K, 64K, 32K, 8K, 4K, 2K, 1K}) and calculated cyclic redundancy check codes (e.g. {TR1, TR2, ..., TR12}, {TM1, TM2, ..., TM24}, ...) of all the data blocks in the target version corresponding to each block size in the set are packaged into a response data packet.

At step S802, the response data packet is sent to the mobile terminal requesting the CRC code request.

At step S803, in response to receiving a zero differential packet request transmitted by the mobile terminal, an optimal block size and identifications of the data blocks with different corresponding CRC codes, i.e., update identifications, are parsed from the request. For example, the optimal block size is 512K, and the update identifications are 1, 3, and 9, indicating that the data of these blocks need to be updated again.

At step S804, according to the optimal block size and the identifications of the update data blocks, the data blocks that need to be updated (such as data block 1, data block 3 and data block 9 in the case of the block size of 512K) are extracted from the target version and packaged into a zero differential packet.

At step S805, the zero differential data packet is sent to a zero differential requesting mobile terminal.

At step S806, the processing ends.

In the above embodiments of the present invention, aiming at the problem whereby the conventional differential update fails abnormally and the zero differential update packet cannot be put into the storage space, a block size set and cyclic redundancy check codes of blocks of a target version corresponding to each block size in the set are obtained by interacting with the server, and a block size is selected from the block size set in descending order to calculate the cyclic redundancy check code of each block of data in the current version, the dynamic selection of the block size is stopped until a total data size of corresponding blocks of data of the current version that are different from target check codes meets the requirement of current storage space for updating, and then the optimal block size and the identifications of the blocks with different check codes are packaged into request information and sent to the server. The server parses the optimal block size and the identifications of the blocks with different check codes according to the request information to obtain the corresponding data blocks in the target version and package same and send same to the mobile terminal for zero differential update, which can effectively solve the above problem.

An embodiment of the present invention further provides a storage medium in which a computer program is stored, where the computer program is configured, when executed, to perform the steps in the above method embodiments.

In this embodiment, the storage medium described above may include, but is not limited to, various media that can store computer programs, such as USB flash drive, Read-Only Memory (ROM), Random Access Memory (RAM), mobile hard disk, magnetic disk or optical disk.

An embodiment of the present invention further provides an electronic device, including a memory and a processor, where a computer program is stored in the memory, and the processor is configured to execute the computer program to perform the steps in the above method embodiments.

Obviously, it should be understood by those having ordinary skills in the art that the above modules or steps of the present invention may be implemented by a general computing device, and they may be concentrated on a single computing device or distributed on a network composed of a plurality of computing devices. In some embodiments, they may be implemented by program codes executable by a computing device, so that they may be stored in a storage device and executed by the computing devices. In some cases, the steps shown or described may be executed in a different order from here, or they may be made into individual integrated circuit modules, or a plurality of modules or steps of them may be made into a single integrated circuit module. In this way, the present invention is not limited to any particular combination of hardware and software.

In the above embodiments of the present invention, a block size meeting the update storage space requirement is selected according to the check code information, and the update is performed based on the update package regarding this block size, so that the problem whereby the storage space for updating cannot store a zero differential update package resulting in that the zero differential update cannot be performed in the existing technology can be solved at least to a certain extent.

The above is only the description of several embodiments of the present invention, and is not intended to limit the present invention defined in the appended claims.

## Claims

1. A method for zero differential updating to recover a terminal device after a failure update, comprising:
obtaining, by the terminal device from a server, check code information of data blocks corresponding to each block size in a block size set of a target version (S202);
selecting, by the terminal device, a block size from the block size set in descending order, until identifying a target block size from the block size set according to the check code information, wherein data blocks which need to be updated, corresponding to the target block size, have a total size that is less than an available FOTA storage space of the terminal device (S204);
transmitting, by the terminal device, a zero differential packet request message to the server, wherein the zero differential packet request message carries an identification of the target block size and identifications of the data blocks of the target version corresponding to the target block size and having different check codes from the corresponding data blocks of the version to be updated; and
obtaining, by the terminal device from the server, a zero differential update package of the target version corresponding to the target block size, and performing, by the terminal device, a update on a version to be updated in the terminal device in a full-version update mode (S206).

2. The method of claim 1, wherein the obtaining, by the terminal device from a server, check code information of data blocks corresponding to each block size in a block size set of a target version comprises:
transmitting, by the terminal device, a first request message to the server, wherein the first request message is configured to request the check code information of data blocks corresponding to each block size in a block size set of a target version; and
receiving, by the terminal device, a first response message from the server, wherein the first response message carries the block size set of the target version and check codes of the data blocks corresponding to each block size in a block size of a target version.

3. The method of claim 1, wherein the identifying, by the terminal device, a target block size from the block size set according to the check code information comprises:
calculating, by the terminal device, check codes of data blocks with the block size in the version to be updated;
calculating, by the terminal device, a total size of data blocks with the block size of the target version having different check codes from the corresponding data blocks of the version to be updated, and taking the total size as an update size;
determining, by the terminal device, whether the update size regarding the block size meets the update requirement of storage space; and
identifying, by the terminal device, the block size as the target block size in response to a determination that the update size regarding the block size meets the update requirement of storage space; or reselecting a new block size from the block size set in response to a determination that the update size regarding the block size does not meet the update requirement of storage space.

4. The method of claim 3, wherein the obtaining, by the terminal device, from the server, a zero differential update package of the target version corresponding to the target block size, and performing a zero differential update on a version to be updated comprises:
receiving, by the terminal device, a zero differential packet request response message from the server, wherein the request response message carries the data blocks of the target version corresponding to the target block size and having different check codes from the corresponding data blocks of the version to be updated; and
updating, by the terminal device, the version to be updated according to the data blocks carried in the zero differential packet request response message.

5. A method for zero differential updating to recover a terminal device after a failure update, comprising:
sending, by a server to the terminal device, check code information of data blocks corresponding to each block size in a block size set of a target version (S302);
receiving, by the server from the terminal device, a zero differential packet request message, wherein the zero differential packet request message carries an identification of the target block size and identifications of the data blocks of the target version corresponding to the target block size and having different check codes from the corresponding data blocks of the version to be updated,
wherein the target block size is selected, by the terminal device, from the block size set in descending order, until identifying a target block size from the block size set according to the check code information, wherein data blocks which need to be updated, corresponding to the target block size, have a total size that is less than an available FOTA storage space of the terminal device (S304); and
sending, by the server to the terminal device, a zero differential update package of the target version corresponding to the target block size (S306) for updating the terminal device in a full-version update mode.

6. The method of claim 5, wherein the sending, by a server to the terminal device, check code information of data blocks corresponding to each block size in a block size set of a target version comprises:
receiving, by the server, a first request message from the terminal device, wherein the first request message is configured to request check code information of data blocks corresponding to each block size in a block size set of a target version; and
transmitting, by the server, a first response message to the terminal device, wherein the first response message carries the block size set of the target version and check codes of the data blocks corresponding to each block size in a block size of a target version.

7. The method of claim 5, wherein the receiving, by the server, information of a target block size of the target version transmitted by the terminal device comprises:
receiving, by the server, a zero differential packet request message transmitted by the terminal device, wherein the zero differential packet request message carries an identification of the target block size and identifications of the data blocks of the target version corresponding to the target block size and having different check codes from the corresponding data blocks of the version to be updated.

8. The method of claim 7, wherein the sending, by the server to the terminal device, a zero differential update package of the target version corresponding to the target block size comprises:
transmitting, by the server, a zero differential packet request response message to the terminal device, wherein the request response message carries the data blocks of the target version corresponding to the target block size and having different check codes from the corresponding data blocks of the version to be updated.

9. A non-volatile storage medium storing a computer program, wherein the computer program is configured, when executed, to perform a method of one of claims 1 to 4 or a method of one of claims 5 to 8.

10. An electronic device, comprising a memory (102, 202) and a processor (101, 201), wherein a computer program is stored in the memory (102, 202), and the processor (101, 201) is configured to execute the computer program to perform a method of one of claims 1 to 4 or a method of one of claims 5 to 8.

## Patentansprüche

1. Verfahren zum nicht-differenziellen Aktualisieren, um ein Endgerät nach einer fehlerhaften Aktualisierung wiederherzustellen, umfassend:
Beziehen, durch das Endgerät von einem Server, von Prüfcodeinformationen von Datenblöcken entsprechend jeder Blockgröße in einem Blockgrößensatz einer Zielversion (S202),
Auswählen, durch das Endgerät, einer Blockgröße aus dem Blockgrößensatz in absteigender Reihenfolge, bis eine Zielblockgröße aus dem Blockgrößensatz gemäß den Prüfcodeinformationen identifiziert wird, wobei Datenblöcke, die aktualisiert werden müssen, entsprechend der Zielblockgröße, eine Gesamtgröße aufweisen, die kleiner ist als ein verfügbarer FOTA-Speicherplatz des Endgeräts (S204),
Übertragen, durch das Endgerät, einer Anfragenachricht nach einem nicht-differenziellen Paket an den Server, wobei die Anfragenachricht nach einem nicht-differenziellen Paket eine Identifizierung der Zielblockgröße und Identifizierungen der Datenblöcke der Zielversion mitführt, die der Zielblockgröße entsprechen und verschiedene Prüfcodes von den entsprechenden Datenblöcken der zu aktualisierenden Version aufweisen, und
Beziehen, durch das Endgerät von dem Server, eines nicht-differenziellen Aktualisierungspakets der Zielversion entsprechend der Zielblockgröße und Durchführen, durch das Endgerät, einer Aktualisierung an einer zu aktualisierenden Version in dem Endgerät in einem Vollversion-Aktualisierungsmodus (S206).

2. Verfahren nach Anspruch 1, wobei das Beziehen, durch das Endgerät von einem Server, von Prüfcodeinformationen von Datenblöcken entsprechend jeder Blockgröße in einem Blockgrößensatz einer Zielversion Folgendes umfasst:
Übertragen, durch das Endgerät, einer ersten Anfragenachricht an den Server, wobei die erste Anfragenachricht dafür konfiguriert ist, die Prüfcodeinformationen von Datenblöcken entsprechend jeder Blockgröße in einem Blockgrößensatz einer Zielversion anzufragen, und
Empfangen, durch das Endgerät, einer ersten Antwortnachricht von dem Server, wobei die erste Antwortnachricht den Blockgrößensatz der Zielversion und Prüfcodes der Datenblöcke entsprechend jeder Blockgröße in einer Blockgröße einer Zielversion mitführt.

3. Verfahren nach Anspruch 1, wobei das Identifizieren, durch das Endgerät, einer Zielblockgröße aus dem Blockgrößensatz gemäß den Prüfcodeinformationen Folgendes umfasst:
Berechnen, durch das Endgerät, von Prüfcodes von Datenblöcken mit der Blockgröße in der zu aktualisierenden Version,
Berechnen, durch das Endgerät, einer Gesamtgröße von Datenblöcken mit der Blockgröße der Zielversion, die verschiedene Checkcodes von den entsprechenden Datenblöcken der zu aktualisierenden Version aufweisen, und Übernehmen der Gesamtgröße als eine Größe der Aktualisierung,
Bestimmen, durch das Endgerät, ob die Größe der Aktualisierung hinsichtlich der Blockgröße die Anforderung der Aktualisierung an den Speicherplatz erfüllt, und
Identifizieren, durch das Endgerät, der Blockgröße als die Zielblockgröße in Reaktion auf eine Bestimmung, dass die Größe der Aktualisierung hinsichtlich der Blockgröße die Anforderung der Aktualisierung an den Speicherplatz erfüllt, oder Neuauswählen einer neuen Blockgröße aus dem Blockgrößensatz in Reaktion auf eine Bestimmung, dass die Größe der Aktualisierung hinsichtlich der Blockgröße die Anforderung der Aktualisierung an den Speicherplatz nicht erfüllt.

4. Verfahren nach Anspruch 3, wobei das Beziehen, durch das Endgerät von dem Server, eines nicht-differenziellen Aktualisierungspakets der Zielversion entsprechend der Zielblockgröße und das Durchführen einer nicht-differenziellen Aktualisierung an einer zu aktualisierenden Version Folgendes umfasst:
Empfangen, durch das Endgerät, einer Antwortnachricht auf die Anfrage nach einem nicht-differenziellen Paket von dem Server, wobei die Antwortnachricht auf die Anfrage die Datenblöcke der Zielversion mitführt, die der Zielblockgröße entsprechen und verschiedene Prüfcodes von den entsprechenden Datenblöcken der zu aktualisierenden Version aufweisen, und
Aktualisieren, durch das Endgerät, der zu aktualisierenden Version gemäß den Datenblöcken, die in der Antwortnachricht auf die Anfrage nach einem nicht-differenziellen Paket mitgeführt werden.

5. Verfahren zum nicht-differenziellen Aktualisieren, um ein Endgerät nach einer fehlerhaften Aktualisierung wiederherzustellen, umfassend:
Senden, durch einen Server an das Endgerät, von Prüfcodeinformationen von Datenblöcken entsprechend jeder Blockgröße in einem Blockgrößensatz einer Zielversion (S302),
Empfangen, durch den Server von dem Endgerät, einer Anfragenachricht nach einem nicht-differenziellen Paket, wobei die Anfragenachricht nach einem nicht-differenziellen Paket eine Identifizierung der Zielblockgröße und Identifizierungen der Datenblöcke der Zielversion mitführt, die der Zielblockgröße entsprechen und verschiedene Prüfcodes von den entsprechenden Datenblöcken der zu aktualisierenden Version aufweisen,
wobei die Zielblockgröße durch das Endgerät aus dem Blockgrößensatz in absteigender Reihenfolge ausgewählt wird, bis eine Zielblockgröße aus dem Blockgrößensatz gemäß den Prüfcodeinformationen identifiziert wird, wobei Datenblöcke, die aktualisiert werden müssen, entsprechend der Zielblockgröße, eine Gesamtgröße aufweisen, die kleiner ist als ein verfügbarer FOTA-Speicherplatz des Endgeräts (S304), und
Senden, durch den Server an das Endgerät, eines nicht-differenziellen Aktualisierungspakets der Zielversion entsprechend der Zielblockgröße (S306) zum Aktualisieren des Endgeräts in einem Vollversion-Aktualisierungsmodus.

6. Verfahren nach Anspruch 5, wobei das Senden, durch einen Server an das Endgerät, von Prüfcodeinformationen von Datenblöcken entsprechend jeder Blockgröße in einem Blockgrößensatz einer Zielversion Folgendes umfasst:
Empfangen, durch den Server, einer ersten Anfragenachricht von dem Endgerät, wobei die erste Anfragenachricht dafür konfiguriert ist, Prüfcodeinformationen von Datenblöcken entsprechend jeder Blockgröße in einem Blockgrößensatz einer Zielversion anzufragen, und
Übertragen, durch den Server, einer ersten Antwortnachricht an das Endgerät, wobei die erste Antwortnachricht den Blockgrößensatz der Zielversion und Prüfcodes der Datenblöcke entsprechend jeder Blockgröße in einer Blockgröße einer Zielversion mitführt.

7. Verfahren nach Anspruch 5, wobei das Empfangen, durch den Server, von Informationen einer Zielblockgröße der Zielversion, die durch das Endgerät übertragen werden, Folgendes umfasst:
Empfangen, durch den Server, einer Anfragenachricht nach einem nicht-differenziellen Paket, die von dem Endgerät übertragen wird, wobei die Anfragenachricht nach einem nicht-differenziellen Paket eine Identifizierung der Zielblockgröße und Identifizierungen der Datenblöcke der Zielversion mitführt, die der Zielblockgröße entsprechen und verschiedene Prüfcodes von den entsprechenden Datenblöcken der zu aktualisierenden Version aufweisen.

8. Verfahren nach Anspruch 7, wobei das Senden, durch den Server an das Endgerät, eines nicht-differenziellen Aktualisierungspakets der Zielversion entsprechend der Zielblockgröße Folgendes umfasst:
Übertragen, durch den Server, einer Antwortnachricht auf die Anfrage nach einem nicht-differenziellen Paket an das Endgerät, wobei die Antwortnachricht auf die Anfrage die Datenblöcke der Zielversion mitführt, die der Zielblockgröße entsprechen und verschiedene Prüfcodes von den entsprechenden Datenblöcken der zu aktualisierenden Version aufweisen.

9. Nicht-flüchtiges Speichermedium, das ein Computerprogramm speichert, wobei das Computerprogramm dafür konfiguriert ist, bei Ausführung ein Verfahren nach einem der Ansprüche 1 bis 4 oder ein Verfahren nach einem der Ansprüche 5 bis 8 durchzuführen.

10. Elektronische Vorrichtung, umfassend einen Speicher (102, 202) und einen Prozessor (101, 201), wobei ein Computerprogramm in dem Speicher (102, 202) gespeichert ist und der Prozessor (101, 201) dafür konfiguriert ist, das Computerprogramm auszuführen, um ein Verfahren nach einem der Ansprüche 1 bis 4 oder ein Verfahren nach einem der Ansprüche 5 bis 8 durchzuführen.

## Revendications

1. Procédé de mise à jour du différentiel zéro destiné à la récupération d'un dispositif terminal après un échec de mise à jour comprenant :
l'obtention, par le dispositif terminal à partir d'un serveur, d'informations sur le code de contrôle des blocs de données correspondant à chaque taille de bloc dans un ensemble de tailles de bloc d'une version cible (S202) ;
la sélection, par le dispositif terminal, d'une taille de bloc dans l'ensemble de tailles de blocs par ordre décroissant, jusqu'à l'identification d'une taille de bloc cible dans l'ensemble de tailles de blocs en fonction des informations de code de contrôle, dans lequel les blocs de données devant être mis à jour, correspondants à la taille de bloc cible, ont une taille totale inférieure à l'espace de stockage FOTA disponible du dispositif terminal (S204) ;
la transmission, par le dispositif terminal, d'un message de demande de paquet du différentiel zéro au serveur, dans lequel le message de demande de paquet du différentiel zéro contient une identification de la taille de bloc cible et des identifications des blocs de données de la version cible correspondant à la taille de bloc cible et ayant des codes de contrôle différents des blocs de données correspondants de la version à mettre à jour ; et
l'obtention, par le dispositif terminal à partir du serveur, d'un paquet de mise à jour du différentiel zéro de la version cible correspondant à la taille de bloc cible, et l'exécution, par le dispositif terminal, d'une mise à jour d'une version à mettre à jour dans le dispositif terminal dans un mode de mise à jour de la version complète (S206).

2. Procédé selon la revendication 1, dans lequel l'obtention, par le dispositif terminal à partir d'un serveur, d'informations sur le code de contrôle des blocs de données correspondant à chaque taille de bloc dans un ensemble de tailles de bloc d'une version cible comprend :
la transmission, par le dispositif terminal, d'un premier message de demande au serveur, dans lequel le premier message de demande est configuré pour demander les informations de code de contrôle des blocs de données correspondant à chaque taille de bloc dans un ensemble de tailles de bloc d'une version cible ; et
la réception, par le dispositif terminal, d'un premier message de réponse du serveur, dans lequel le premier message de réponse contient l'ensemble de tailles de blocs de la version cible et les codes de contrôle des blocs de données correspondant à chaque taille de bloc dans une taille de bloc d'une version cible.

3. Procédé selon la revendication 1, dans lequel l'identification, par le dispositif terminal, d'une taille de bloc cible à partir de l'ensemble de tailles de bloc en fonction des informations de code de contrôle comprend :
le calcul, par le terminal, des codes de contrôle des blocs de données ayant la taille du bloc dans la version à mettre à jour ;
le calcul, par le dispositif terminal, d'une taille totale de blocs de données avec la taille de bloc de la version cible ayant des codes de contrôle différents des blocs de données correspondants de la version à mettre à jour, et l'utilisation de la taille totale comme taille de mise à jour ;
la détermination, par le dispositif terminal, du fait que la taille de la mise à jour concernant la taille du bloc répond à l'exigence de mise à jour de l'espace de stockage ; et
l'identification, par le dispositif terminal, de la taille de bloc comme taille de bloc cible en réponse à la détermination selon laquelle la taille de mise à jour relative à la taille de bloc répond à l'exigence de mise à jour de l'espace de stockage ; ou la nouvelle sélection d'une nouvelle taille de bloc dans l'ensemble de tailles de bloc en réponse à la détermination selon laquelle la taille de mise à jour relative à la taille de bloc ne répond pas à l'exigence de mise à jour de l'espace de stockage.

4. Procédé selon la revendication 3, dans lequel l'obtention, par le dispositif terminal, du serveur, d'un paquet de mise à jour du différentiel zéro de la version cible correspondant à la taille de bloc cible, et l'exécution d'une mise à jour du différentiel zéro sur une version à mettre à jour comprend :
la réception, par le dispositif terminal, d'un message de réponse de demande de paquet du différentiel zéro en provenance du serveur, dans lequel le message de réponse de demande contient les blocs de données de la version cible correspondant à la taille de bloc cible et ayant des codes de contrôle différents des blocs de données correspondants de la version à mettre à jour ; et
la mise à jour, par le dispositif terminal, de la version à mettre à jour en fonction des blocs de données contenus dans le message de réponse à la demande de paquet du différentiel zéro.

5. Procédé de mise à jour du différentiel zéro destiné à la récupération d'un dispositif terminal après un échec de mise à jour comprenant :
l'envoi, par un serveur au dispositif terminal, d'informations sur le code de contrôle des blocs de données correspondant à chaque taille de bloc dans un ensemble de tailles de bloc d'une version cible (S302) ;
la réception, par le serveur à partir du dispositif terminal, d'un message de demande de paquet du différentiel zéro, dans lequel le message de demande de paquet du différentiel zéro contient une identification de la taille de bloc cible et des identifications des blocs de données de la version cible correspondant à la taille de bloc cible et ayant des codes de contrôle différents des blocs de données correspondants de la version à mettre à jour, dans lequel la taille de bloc cible est choisie, par le dispositif terminal, dans l'ensemble de tailles de blocs par ordre décroissant, jusqu'à l'identification d'une taille de bloc cible dans l'ensemble de tailles de blocs en fonction des informations de code de contrôle, dans lequel les blocs de données qui doivent être mis à jour, correspondant à la taille de bloc cible, ont une taille totale inférieure à l'espace de stockage FOTA disponible du dispositif terminal (S304), et ;
l'envoi, par le serveur vers le dispositif terminal, d'un paquet de mise à jour du différentiel zéro de la version cible correspondant à la taille de bloc cible (S306) pour la mise à jour du dispositif terminal dans un mode de mise à jour de la version complète.

6. Procédé selon la revendication 5, dans lequel l'envoi, par un serveur au dispositif terminal, d'informations sur le code de contrôle des blocs de données correspondant à chaque taille de bloc dans un ensemble de tailles de bloc d'une version cible comprend :
la réception, par le serveur, d'un premier message de demande à partir du dispositif terminal, dans lequel le premier message de demande est configuré pour demander les informations de code de contrôle des blocs de données correspondant à chaque taille de bloc dans un ensemble de tailles de bloc d'une version cible ; et
la transmission, par le serveur, d'un premier message de réponse au dispositif terminal, dans lequel le premier message de réponse contient l'ensemble de tailles de blocs de la version cible et les codes de contrôle des blocs de données correspondants à chaque taille de bloc dans une taille de bloc d'une version cible.

7. Procédé selon la revendication 5, dans lequel la réception, par le serveur, d'informations sur la taille d'un bloc cible de la version cible transmise par le dispositif terminal comprend :
la réception, par le serveur, d'un message de demande de paquet du différentiel zéro par le dispositif terminal, dans lequel le message de demande de paquet du différentiel zéro contient une identification de la taille de bloc cible et des identifications des blocs de données de la version cible correspondant à la taille de bloc cible et ayant des codes de contrôle différents des blocs de données correspondants de la version à mettre à jour.

8. Procédé selon la revendication 7, dans lequel l'envoi, par le serveur au dispositif terminal, d'un paquet de mise à jour du différentiel zéro de la version cible correspondant à la taille de bloc cible comprend :
la transmission, par le serveur, d'un message de réponse de demande de paquet du différentiel zéro au dispositif terminal, dans lequel le message de réponse de demande contient les blocs de données de la version cible correspondant à la taille de bloc cible et ayant des codes de contrôle différents des blocs de données correspondants de la version à mettre à jour.

9. Support de mémoire non volatile stockant un programme informatique, dans lequel le programme informatique est configuré, lorsqu'il est exécuté, pour réaliser un procédé selon l'une quelconque des revendications 1 à 4 ou un procédé selon l'une quelconque des revendications 5 à 8.

10. Dispositif électronique comprenant une mémoire (102, 202) et un processeur (101, 201), dans lequel un programme informatique est stocké dans la mémoire (102, 202), et le processeur (101, 201) est configuré pour exécuter le programme informatique afin de réaliser un procédé selon l'une quelconque des revendications 1 à 4 ou un procédé selon l'une quelconque des revendications 5 à 8.
